# EUROPEAN PATENT SPECIFICATION

(11) **EP 0 504 721 B1**
(45) Date of publication and mention of the grant of the patent: **03.06.1998**
(21) Application number: 92104147.1
(22) Date of filing: 11.03.1992
(51) Int. Cl.: H04N 7/087

(54) **Teletext transmissions receiver**
Teletextempfänger
Récepteur de télétexte

(30) Priority: 15.03.1991 IT TO910185
(43) Date of publication of application: 23.09.1992
(60) Divisional application: 97102159.7
(73) Proprietor: EDICO S.r.l., I-00197 Roma (IT)
(72) Inventor: Dini, Roberto, I-10098 Rivoli (TO) (IT)

(56) References cited:
- EP-A- 0 037 077
- EP-A- 0 264 565
- EP-A- 0 290 000
- EP-A- 0 379 713
- EP-A- 0 406 972
- DE-A- 3 540 774
- US-A- 4 837 620
- US-A- 4 908 706
- NTZ NACHRICHTENTECHNISCHE ZEITSCHRIFT vol. 42, no. 11, 30 November 1989, BERLIN DE pages 724 - 727 JG 'TOP macht Fernsehtext benutzerfreundlich'
- RUNDFUNKTECHNISCHE MITTEILUNGEN vol. 31, no. 2, 30 April 1987, NORDERSTEDT DE pages 83 - 93 V.G.EITZ ET AL 'TOP - Ein Verfahren zur vereinfachten Anwahl von Fernsehtext-Tafeln durch den Zuschauer'

## Description

The present invention relates to a teletext transmissions receiver, under the form of a plurality of pages, inserted in the television signal, that can be of the static type, that is single pages, or of the multifile type, each being made up of a plurality of sub-pages, that are substituted in time in the cycle and are also called rolling pages, comprising means for receiving and demodulating the television signal, and decoding means for extracting the associated teletext signal and selection means for selecting a chosen page from those transmitted, and memory means for storing at least one chosen teletext page.

There are teletext transmission receivers known having the above mentioned characteristics.

As known the major problem arising from teletext reception is the inconvenience that characterises the selection of the desired pages to be consulted.

There has been gradual progress in minimizing in part such inconveniences; various modified teletext transmission systems have been proposed (FLOP system, TOP system, etc.); ever increasing sophisticated decoders have been developed. However one of the major problems is that of the so called rolling pages; these are actually real folders of sub-pages, in varying numbers from 2 to 16; all the sub-pages carry the same page number: in reality the page number identifies the multifile and not the single sub-page; therefore it is not possible to directly select a single sub-page (i.e. giving a command that allows for the immediate availability without having to attend that the other sub-pages of the multifile be received, existing between that being transmitted in that moment of the cycle by the transmitter and that desired by the user); it is known that the single sub-pages are substituted one by one in the transmission cycle at determined intervals, for instance every 20 seconds. As an example, with reference being made to the Italian teletext, called Televideo by the RAI. It has been supposed that page 677 has been selected, that is a multifile-page of 6 sub-pages. The moment in which the page is acquired by the decoder the sub-page 2 is being transmitted; after approximately 20 seconds it is substituted with sub-page 3; after a further 20 seconds with sub-page 4 and so on.

The user is in a position of having just started to read the sub-page 2, that is then substituted (this substitution takes place even more quickly if the rolling page has not been directly called, but re-called from a memory); sub-page 3 has to be read, then 4, then 5 then 6, and then, finally, sub-page 1 and then 2, that he was not able to read at the beginning. It is true that with the use of the STOP key (or HALT) it is possible to stop the rolling; but when the STOP key is released, the sub-page that is present in that moment of the cycle is acquired; it would occur that, if the user had held sub-page 2 at the beginning of this hypothetical example, after having released the procedure he would find himself with sub-page 4 or 5; the remedy in this case is therefore worse than the problem.

The problem is accentuated by the fact that the majority of pages are of the multifile type: with Televideo more than two thirds of the pages are multifiles and less than a third being static pages. As mentioned there are multifiles made up of 16 sub-pages, that requires 5-6 minutes for all of them to be displayed, and plans are being made to increase the maximum number of sub-pages of a multifile; it is not to be overlooked that sometimes only a single sub-page is of interest to the user (for instance in the case of train time-tables, or the weather forecast).

The extreme inconveniences of such a situation are more than evident. It has been proposed (note the article "Teletext Multi-page System mit TPU 2700", Elektronik, vol. 34, N.12, 14-6-1985) that in cases where the user selects a multifile-page, the decoder automatically provides for the relative sub-page to be memorised (up to maximum of 7) as soon as they are received; said memorised sub-pages can be "glanced through" by the user.

However even the system described in the article presents various inconveniences:
- being as the memory is of 8 pages in whole, the fact of occupying 7 for the sub-pages prevents the possibility of keeping in the memory the other pages normally memorised, such as the following page, the index page of the successive group, the index page of the successive block, and so on;
- the proposed system cancels from the memory the sub-pages already seen by the user (so as to make place for others); thus preventing the "backward glancing" of the sub-pages so as to re-read something already seen (for example in the case of the train time-table, as on a determined line only a few trains are used, it may be of interest to observe the situation on an alternative line for arriving at the same destination);
- the consulting speed is limited by the intervening time between the transmission of one sub-page and the successive (20 seconds); if the first 5 sub-pages are not of interest , it is necessary to attend 100 seconds before the sixth is displayed.
- and finally the system described in the article, that acquires a new page upon receiving the "clear page" signal, should fill the whole memory even if the rolling pages are only two, and not, however be able to ascertain the number of the sub-page acquired and therefore, for example, not know which is page 1, which is page 2 and so on.

Certainly this system is not therefore the best for the user; and the invention is based on the acknowledgement of this fact. The aim of the present invention is to indicate a more flexible teletext transmissions receiver than those known, able to avoid or to minimise the mentioned inconveniences, in relation to consulting the rolling pages, providing a remedy for a real set back of the actual teletext system.

The object of the present invention is achieved by the teletext transmissions receiver defined in claim 1.

Further aims and advantages of the present invention will become clear from the following detailed description and from the annexed drawings supplied as a non-limiting example, wherein:
- figure 1 schematically represents part of the electrical circuit of a teletext transmissions receiver;
- figure 2 schematically represents a significant part of the logic circuit of the control unit 48 of figure 1;
- figure 3 schematically represents a second significant part of the logic circuit of the control unit of figure 1.

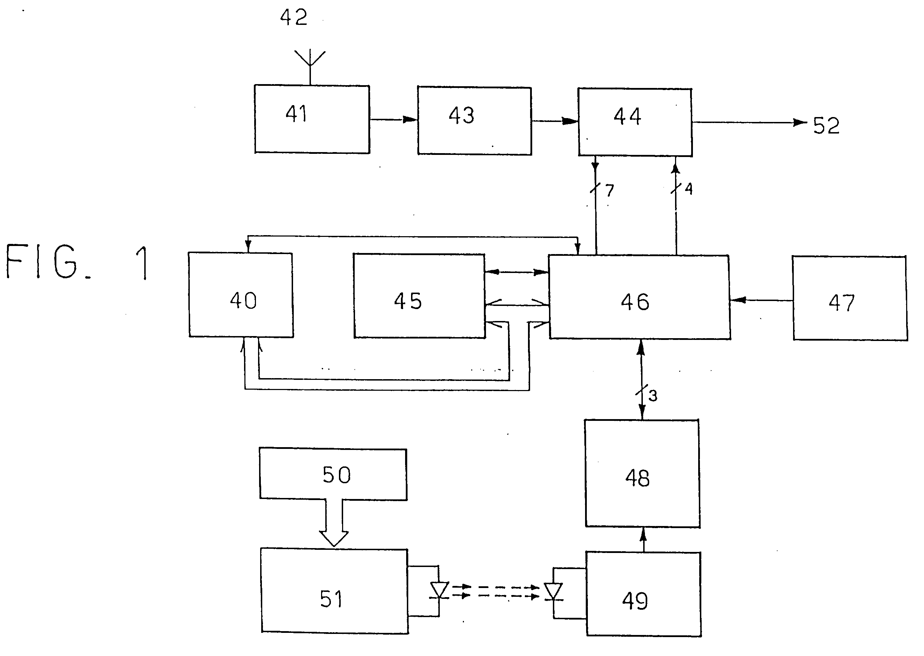

In figure 1 reference number 42 indicates a receiving antenna, connected to a television receiver for picking up the television signals transmitted, containing the teletext signals. Said antenna is connected to a conventional tuner, indicated with the reference number 41; an intermediate frequency signal amplifier follows said tuner, also of the conventional type, indicated with number 43.

The amplifier 43 supplies at its exit the composite video signal and is connected to a circuit amplifier and video signal processor indicated with the reference number 44; the processor circuit 44 can be of the VCU 2133 type for example made by Hitachi, which also executes the analogue-digital conversion and the digital -analogue re-conversion of the signal; at the output (reference number 52) of circuit 44 the three signals RGB (red, green, blue) are available for the image display device (for instance a colour television screen, not represented in the figures).

The processing circuit 44 is connected, by means of two multiwire connectors, to a decoding circuit of teletext signals, indicated with the reference number 46; such circuit 46 can be of the TPU 2732 type by ITT, or an equivalent circuit by another producer.

The decoding circuit 46 comprises:
- a data acquisition unit, that receives the digitised input video signal, coming from circuit 44;
- a RAM memory that serves as a buffer of the teletext page to be displayed;
- a control unit of the eight page external memory 45;
- a character generator and a control circuit of the display;
- a timing unit, that receives the clock signal from the clock circuit generator, indicated with the reference number 47, that may be of the MCU 2632 type for example, by ITT;
- an interface for the bus coming from the central control unit 48.

The acquisition of the teletext data starts in line 7 and finishes at line 22; the teletext information is synchronised and identified; a comparator, pre-selects the pages whose numbers have been called by the control unit 48 and inserts them in the memory 45; the internal memory is used as a buffer.

The display of the teletext page starts on line 48 and finishes on line 286; the decoder selects one of the eight pages in the memory for the display; the words of 8 bits (characters) are transformed into a 6x10 point matrix by the character generator and are displayed in 24 lines of 40 characters each.

Circuit 46 receives commands from unit 48 through an appropriate bus.

The external memory 45 of 64 Kbits is organised into 8 sectors of 8 Kbits each; each sector is organised into 25 lines of 40 bytes each, plus a line of 24 bytes; the lines 0-23 represent the 24 lines of the teletext page to be displayed; line 25 of every sector is used for the information control of the relative sector, while line 24 of sector zero and one respectively contain general control information and the rolling header. The central control unit, indicated with the reference number 48, can be of the CCU 2030 type for example, by ITT, or another logic control circuit comprising a similar microprocessor and an appropriate operative instruction program.

Said central control unit, apart from circuit 46, is also connected to an amplifying circuit, indicated with the reference number 49, that works as a receiver of infra-red rays' signals, coming from a remote control device, indicated with the number 51; this is connected to a command keyboard, indicated with the reference number 50.

The commands given by the user, by means of keyboard 50, by means of the transmitter 51 and the receiver 49, arrive at the control unit 48, that provides for the decoding of said commands and to supply the appropriate control signals to the circuit 46.

In the case that the receiver of figure 1 were similar to what has been described in the cited article, in the case of selecting a multifile-page, as page 677 of the RAI Televideo, for returning to the first, the decoder would gradually provide for memorising the sub-pages 2, 3, 4, 5, 6, and 1 in the memory 45.

The user would however have to attend for 100 seconds before being able to see page 1; if he had initially chosen another, for instance 2, the decoder would cancel it the moment that another is selected, for example 1. If the multifile-page 190 is selected, of the Televideo, that has 16 sub-pages, a maximum of only 7 could be memorised; and therefore, so as to view a determined sub-page, it could be necessary to attend for up to 5 minutes.

According to the invention, a second external memory is proposed to be added, indicated in the figure with the reference number 40, having a capacity of at least 200 pages (for instance a read write memory (DRAM) of 2 megabit, of 256 teletext pages), this also being connected to the decoder 46.

It is to be noted for example that the teletext decoding circuit of the MV 1815 type by Plessey can be associated to an external memory of the DRAM type of various capacities, up to 256x4 Kbit each.

According to the invention, as always in the case of the RAI Televideo, the decoder 46, on orders by the control unit 48, will provide for, upon the moment that the receiver has been switched on, and even without the necessity of selecting the teletext mode, to gradually acquiring and memorise in the memory 40 all the sub-pages belonging to the first three blocks of pages (100-199 News, 200-299 Sport, 300-399 Economy and Finance); such sub-pages amount to around one hundred and can therefore easily be stored in the memory 40.

Upon the act of acquisition the decoder is able to tell whether the page is a rolling page (or whether it is part of a multifile), of how many pages the multifile is made up of and what is the number of that particular sub-page; this data is contained in two byte, contained in the line 1 of the page that defines "the rolling index", or the sub-page number, followed by the total number of sub-pages of the multifile (for example 11/16 if the case is the sub-page 11 of a multifile composed of 16 pages); this data is also that displayed; furthermore, in the RAI Televideo, the number of the sub-page (11) is also contained in line zero, that is in the page heading, that is not displayed.

Even being limited to this number (11), contained in the heading, it is possible to memorise the sub-pages in order, so as to be able to presented upon request; even not previously knowing the number (16) of sub-pages comprising the multifile, the decoder is aware of having terminated upon finding the same sub-page number again.

Alternatively, instead of memorising the first three blocks of pages, it could be provided for, upon switching on the receiver, the memorising of the sub-pages of determined blocks preferred by the user, not being necessarily contiguous, selected from those appearing in the general index; with this aim the command organ 50 can be provided with a memory key, that the user would have to depress after having selected the page index of the block that he desires to memorise. The memorising of numbers of preferred blocks would be advantageously carried out in a non-volatile type memory (EAROM) and would therefore remain as a permanent instruction, even in cases of the set being switched off; the set would accept memory commands of other blocks, and the memory operation of the pages in memory 40 would be organised in such a way that, when its capacity has been completely utilised, new requests for memorising will be accepted but the numbers of previous preferred blocks be cancelled.

When the user selects the teletext mode and selects a page, the decoder, apart from memorising, as normal, in the memory 45, the following page in relation to that selected, the group and successive block indexes, etc., will also provide for, if the page selected is a multifile belonging to one of the first three blocks, addressing the memory 40 so that the sub-page N°1 of the particular chosen multifile -page be directly displayed; furthermore it will be pre-dispose the "next page" and "previous page" keys to respectively select the sub-pages N°2 and the last of the multifile. As soon as the user depresses the "next page" key the sub-page N°2 will be displayed, and the "next page" and the "previous page" keys will be pre-disposed to respectively select the sub-pages N°3 and N°1; and so on.

If the user were to select a page of an other block (400-499 weather forecasts and transport; 500-599 Shows; 600-699 Various or 700-799 Work), the decoder could provide to display a warning sign for the user, of the type "the selected page has not been memorised; please wait" and then immediately provide for acquiring and memorising in the memory 40 the sub-pages of all the multifiles of the block (approximately 200 sub-pages for blocks 4, 5 and 6 and approximately 120 for the block 7); and then it will act as described above for the case of the three initial blocks.

In such a way the user will have immediate access, in every case, to any sub-page of any multifile of the three initial blocks; and will also have access to any sub-page of any multifile of one of the other blocks as soon as the decoder has finished memorising the relative sub-pages.

So as to accelerate the memorising the decoder is able to carry out a parallel acquisition of a certain number of multifiles; and in each case priority will be granted to the multifile requested, so that in the worst of cases the maximum period of time needed will be equal to that of the known system; but having the great advantage that every multifile will then be accessible starting from the sub-page N°1 and the others will be available in order and without any delay.

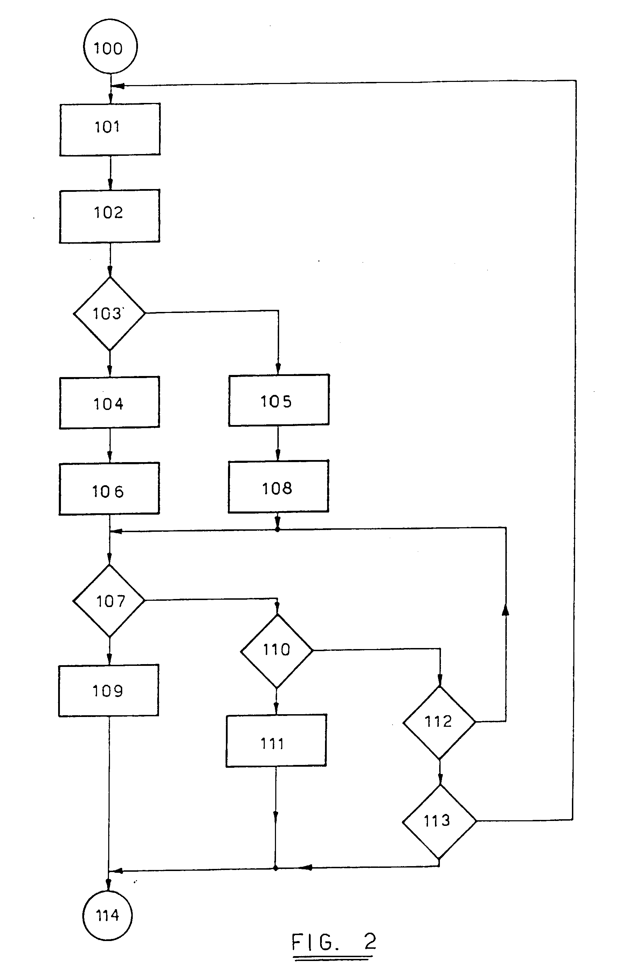

In figure 2 a part of the logic circuit of the central control unit 48 is schematically represented, that allows for the realisation of what has been previously described.

Such circuit may be either realised with the wired logic system or with the system of programmed logic, i.e. utilising a microprocessor; said second system is generally less expensive ,also as normally televisions and video recorders are already provided with one or more microprocessors.

Block 100 is the block of the beginning of the operation of memorising the sub-pages of the block to which the page selected by the user belongs; control then passes to the successive block 101.

Block 101 provides for the acquisition of the number of the page chosen by the user (for instance the number could be compiled on the keyboard of the remote control unit 50); we may suppose that the number is 677. Control passes to the successive block 102.

Block 102 provides to determine the block to which the chosen page belongs; in this case we are concerned with block 600-699; the block 102 also provides for giving the command to the decoder 46 to acquire and memorise (in the memory 40) all the sub-pages of the multifiles whose number falls between 600 and 699, priority however is given to the page requested 677 (it may be supposed for example that the decoder is able to acquire 4 parallel pages: one of which must be that having precedence, page 677, be it a multifile or a static page). Control then passes to the successive block 103.

Block 103 is a control block; it controls whether the chosen page is static; in the affirmative case control passes to block 104; in the negative case control passes to block 105 (in all the control blocks the inferior output is the YES output; whereas the lateral output is the NO output).

Block 104 provides for giving the command to the decoder 46 to display the required page as soon as it has been acquired, and passes control to the block 106.

Block 106 provides to predispose the "next page" key to select, from the memory 45, the successive page to that requested; and the "previous page" key to select, from the same memory, the previous page to that requested. Control passes to block 107.

Block 105 provides for giving the command to the decoder 46 to display the sub-page N°1 of the requested multifile (677) as soon as it has been acquired, and passes the control to block 108.

Block 108 provides to predispose the key "next page" to select, from the memory 40, the sub-page N°2; and the "previous page key to select, from the same memory, sub-page N°6 (the last) of the multifile 677 requested. Control passes to block 107.

Block 107 is a control block; it controls whether the "next page" on the remote control unit 50 has been depressed; in the affirmative case control passes to block 109; in the negative case control passes to block 110.

Block 109 provides for giving the command to the decoder 46 to select and display, from the suited memory, the page by the "next page" key and to consequently move the associated to the "next page" and "previous page" keys. Control passes to block 114.

Block 112 is a control block; it controls whether a command has been made out on the remote control unit 50 different from the "next page" or "previous page" command; in the affirmative case control passes to block 113; in the negative case control returns to block 107.

Block 113 is a control block; it controls whether a command has been made out on the remote control unit 50 different than a new page number; in the affirmative case control passes to block 114; in the negative case control returns to block 101.

Block 114 is the terminal block of the end of the operation; control can return to the initial block 100 or to another similar operative block of the control circuit.

In the circuit described in figure 2 it has been assumed that the operation of memorising the sub-pages of the block has been carried out by an explicit page selection on behalf of the user, made out on the remote control unit 50. It is however, as previously mentioned, favourable to provide that the control unit 48 is predisposed to carry out the said operation automatically, for the first three Televideo page blocks as soon as the teletext mode has been selected by the user, or even, upon turning on the receiver.

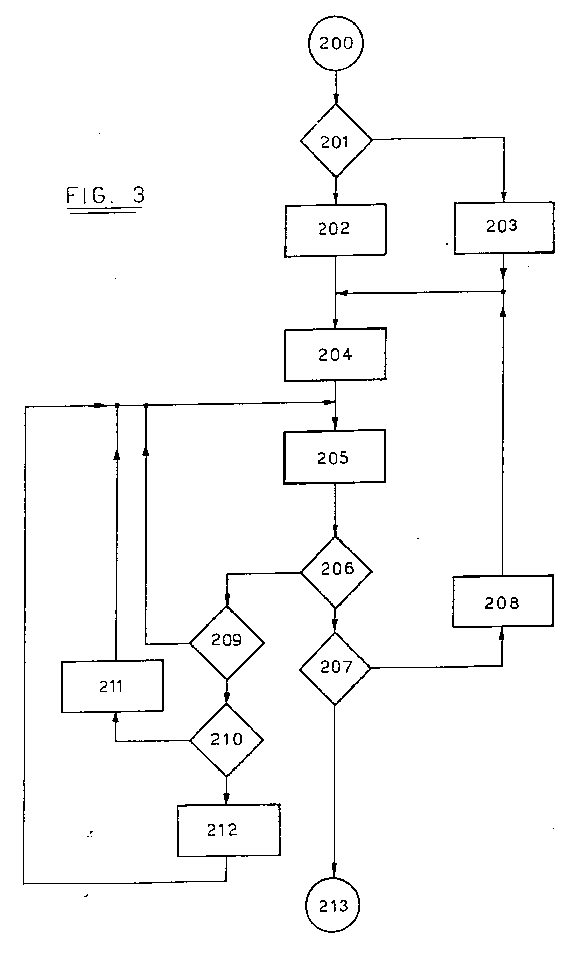

In figure 3 a second part of the logic circuit of the central control unit 48 is schematically represented that allows for realising such initial automatic memorising.

Block 200 is the starting block of the automatic memorising operation; block 200 passes control to the successive block 201.

Block 201 is a control block; it controls whether in the appropriate non-volatile memory the numbers of the blocks preferred by the user have been memorised; in the affirmative case control passes to block 202; in the negative case control passes to block 203.

Block 202 reads the number of the first preferred block and passes it to block 204 to which it hands over the control.

Block 203 writes in the non-volatile memory the numbers of the first three blocks (100-200-300); the number of the first block (100) then passes to block 204.

Block 204 waits to receive the data of the first pages of the block of which it has received the number; control passes to block 205.

Block 205 reads the page transmitted; if it is a rolling page it becomes memorised in the memory 40, and also memorises in an appropriate table, the relative address to enable it to be found later; control passes to block 206.

Block 206 is a control block; it controls whether the received page is the last of the block; in the affirmative case control passes to block 207; in the negative case control passes to block 209.

Block 207 is a control block; it controls whether the block being memorised is the last of the list; in the affirmative case control passes to 213; in the negative case control passes to block 208.

Block 208 reads the number of the successive block on list and returns the control to block 204.

Block 209 is a control block; it controls whether the user has requested a teletext page; in the affirmative case control passes to block 210; in the negative case control passes to block 205.

Block 210 is a control block; it controls whether the page requested by the user has already been memorised; in the affirmative case control passes to block 212; in the negative case control passes to block 211.

Block 211 displays an informative message on the screen, of the type: "the page requested is not yet available; please wait". Control then returns to block 205.

Block 213 is the end of operation block; control passes to another operative block of the system, for example to the initial block 100 of figure 2.

It could occur that the number of sub-pages being present in a page block exceed the capacity of the memory 40; in such a case the control unit can be predisposed to memorise all those possible (for example those corresponding to the first 50 pages of the block), and duly memorise the others in the moment in which a page being of the second half of the block is requested.

It is however favourable to provide for an automatic updating at pre-established intervals (for instance every fifteen minutes) of the memorised sub-pages, so as to avoid that variations be registered (for instance in the case of the news pages).

Such automatic updating can be favourably provided for even during the stand by of the receiver, as far as the teletext data associated to the last television channel selected is concerned and to which a system of teletext data is associated; for this a memory that conserves the relative data is needed (last teletext selected).

Alternately, the possibility for the user to indicate a preferred program could also be provided, from which the teletext data is drawn when the receiver is in stand by.

Another useful characteristic is that of foreseeing what should happen in the case of a program change; various cases can be foreseen:
- if the user commutates from a program with teletext to a program without teletext, the system holds the teletext data in memory until that moment;
- if the user commutates from a program with teletext to a program with a different teletext, the system cancels the memory and acquires the new data;
- it is however wise to provide the user with the possibility to inhibit the cancellation of the acquired data, as the commutation could be temporary; for this an appropriate sequence can easily be provided; without having to add an appropriate key, it could be provided that the user, in the case that he desires to block the cancellation and new acquisition, has to first pass from the teletext to the video of the same program, depress the stop key and then consequently change program; depressing the stop key a second time would reactive the normal acquisition data function.

The characteristics of the receiver of teletext transmissions described result in being clear from the present description and annexed drawings.

From the present description the advantages of the receiver of teletext transmissions object of the present invention also result in being clear.

In particular they consist in the fact that consulting the sub-pages of a selected multifile is made a lot easier, faster and reliable for the user.

It is clear that the receiver of teletext transmissions described is more flexible than those known; it is also clear that numerous variants are possible by the man skilled in the art, to the receiver of teletext transmissions described as an example, without however departing from the novelty principle inherent in the invention.

For example the memorising of the sub-pages in the memory 40 could be still be carried out for the 100 (or other suitable number) previous sub-pages in the cycle of the chosen page and for the following 150 (or other suitable number), independently from the dimension of the block in which the chosen page is to be found.

Furthermore the memory of the normal pages (45) could be incorporated in the memory (40) for the sub-pages.

Finally the memory 40 for the sub-pages could be provided with a greater capacity, for example 8 Megabit, so as to enable, without difficulty the memorising of all the rolling pages of the cycle. Such memory could obviously consist of a sole memory of 8 megabyte, or 4 memories of 2 Megabit each.

## Claims

1. Teletext transmission receiver, the teletext transmissions being under the form of a plurality of pages, inserted in a television signal, that can be of the static type, that is a single page, or of the multifile type, each being made up of a plurality of sub-pages that are substituted in time in the transmission cycle, comprising
- means (41, 42, 43) for receiving and demodulating the television signal,
- decoding means (46) for extracting the associated teletext signal,
- selection means (48, 50, 51) for selecting a choosen page (677) from those transmitted, and
- memory means (45) for memorising at least the content of one choosen teletext page,
characterised by the fact that the receiver comprises
- means for the parallel acquisition, during the same transmission cycle, of a plurality of teletext pages having different page numbers,
- means (102) for memorising in an appropriate memory (40) the content of all the sub-pages belonging to the page block (600-699) of which the choosen teletext page (677) is part, and
- means (40, 101-113, 201-212) allowing for the direct selection of any memorised sub-page (1, 2, 3, 4, 5, 6) of a choosen multifile page (677), using the "next page" and "previous page" keys of the selection means.

2. Teletext transmission receiver, according to claim 1, characterised by the fact that said means for memorising the sub-pages provide for the possibility that, if the block of interest (600-699) is comprised of more sub-pages that can be memorised in said appropriate memory (40), the sub-pages of half of the block (650-699) in which the choosen page (677) is to be found is memorised.

3. Teletext transmission receiver, according to claim 1, characterised by the fact that the receiver comprises additional circuitry means (105) for displaying automatically the sub-page No. 1 of the choosen teletext multifile page (677).

4. Teletext transmission receiver, according to claim 1, characterised by the fact that said additional means comprise circuitry means (108) that provide for addressing the "next page" and "previous page" keys, comprised in said selection means (50) to respectively the successive and preceding sub-page in respect to the displayed sub-page.

5. Teletext transmission receiver, according to claim 1, characterised by the fact that said means (40, 101-113, 201-212) allowing for the direct selection of any memorised sub-page comprise means (203) that provide for the possibility that upon turning on the receiver the content of all the sub-pages of all the multifile pages comprised in the first three page groups (100-199, 200-299, 300-399), is automatically acquired and memorised in said appropriate memory (40).

6. Teletext transmission receiver, according to claim 5, characterised by the fact that said means (203) provide for the possibility that upon turning on the receiver all the sub-pages of all the multifile pages comprised in all the page groups, are automatically acquired and memorised in said appropriate memory (40).

7. Teletext transmission receiver, according to claim 5, characterised by the fact that the possibility of updating at pre-determined periods all the sub-pages memorised in said appropriate memory (40) is provided for.

8. Teletext transmission receiver, according to claim 7, characterised by the fact that all the sub-pages memorised in said appropriate memory (40) are updated approximately every 15 minutes.

9. Teletext transmission receiver, according to claim 7, characterised by the fact that all the sub-pages memorised in said appropriate memory (40) are updated even if the receiver is to be found in a stand-by condition.

10. Teletext transmission receiver, according to claim 9, characterised by the fact that such automatic updating concerns the teletext data associated to the last television channel selected and to which a system of teletext date is associated.

11. Teletext transmission receiver, according to claim 7, characterised by the fact that such automatic updating concerns the teletext data associated to a preferred television channel indicated by the user and the identifying data of which is then memorised.

## Patentansprüche

1. Teletextsendungs-Empfänger, wobei die Teletextsendung die Form mehrerer Seiten aufweist, welche in ein Fernsehsignal eingefügt sind, die statischer Art sein können, die eine einzelne Seite sind, oder Mehrfach-Seiten, von denen jede aus einer Mehrzahl von Folge-Seiten gebildet ist, die zeitlich in dem Sendezyklus verteilt sind, mit
- einer Einrichtung (41, 42, 43) zum Empfangen und Demodulieren des Fernsehsignales,
- einer Dekodiereinrichtung (46) zum Extrahieren des zugeordneten Teletext-Signales,
- einer Selektionseinrichtung (48, 50, 51) zum Selektieren einer ausgewählten Seite (677) aus den gesendeten, und
- einer Speichereinrichtung (45) zum Speichern von wenigstens dem Inhalt einer gewählten Teletextseite,
dadurch gekennzeichnet, daß der Empfänger umfaßt:
- eine Einrichtung für die parallele Erfassung mehrerer Teletextseiten mit unterschiedlichen Seitenzahlen während des gleichen Sendezyklus,
- eine Einrichtung (102) zum Speichern des Inhaltes sämtlicher zu dem Seitenblock (600-699) gehörenden Folgeseiten, von welchen die ausgewählte Teletextseite (677) ein Teil ist, in einem geeigneten Speicher (40), und
- eine Einrichtung (40, 101-113, 201-212), welche die direkte Auswahl jeder gespeicherten Folgeseite (1, 2, 3, 4, 5, 6) einer gewählten Mehrfachseite (677) gestattet, unter Verwendung der Tasten "nächste Seite" und "vorherige Seite" der Selektionseinrichtung.

2. Teletextsendungs-Empfänger nach Anspruch 1,
dadurch gekennzeichnet, daß die Einrichtung zum Speichern der Folgeseiten die Möglichkeit bereitstellt, daß, wenn der interessierende Block (600-699) mehr Folgeseiten umfaßt, als in dem geeigneten Speicher (40) speicherbar sind, die Folgeseiten der Hälfte des Blockes (650-699), in welcher die ausgewählte Seite (677) gefunden wird, gespeichert werden.

3. Teletextsendungs-Empfänger nach Anspruch 1,
dadurch gekennzeichnet, daß der Empfänger eine zusätzliche Schaltungseinrichtung (105) zum automatischen Anzeigen der Folgeseite Nr. 1 der ausgewählten Teletext-Mehrfachseite (677) umfaßt.

4. Teletextsendungs-Empfänger nach Anspruch 1,
dadurch gekennzeichnet, daß die zusätzliche Einrichtung eine Schaltungseinrichtung (108) umfaßt, welche zum Ansprechen die "nächste Seite"- und "vorherige Seite"-Tasten bereitstellt, welche von der Selektionseinrichtung (50) umfaßt sind, um entsprechend nachfolgende und vorausgehende Folgeseiten, bezogen auf die angezeigte Folgeseite, anzusprechen.

5. Teletextsendungs-Empfänger nach Anspruch 1,
dadurch gekennzeichnet, daß die Einrichtung (40, 101-113, 201-212), welche die direkte Auswahl jeder gespeicherten Folgeseite erlaubt, eine Einrichtung (203) umfaßt, welche die Möglichkeit bietet, daß bei Einschalten des Empfängers der Inhalt sämtlicher Folgeseiten sämtlicher in den ersten drei Seitengruppen (100-199, 200-299, 300-399) enthaltenen Mehrfachseiten automatisch erfaßt und in dem geeigneten Speicher (40) gespeichert wird.

6. Teletextsendungs-Empfänger nach Anspruch 5,
dadurch gekennzeichnet, daß die Einrichtung (203) die Möglichkeit bietet, daß bei Einschalten des Empfängers sämtliche Folgeseiten sämtlicher in allen Seitengruppen enthaltenen Mehrfachseiten automatisch erfaßt und in dem geeigneten Speicher (40) gespeichert werden.

7. Teletextsendungs-Empfänger nach Anspruch 5,
dadurch gekennzeichnet, daß die Möglichkeit der Aktualisierung sämtlicher in dem geeigneten Speicher (40) gespeicherten Folgeseiten in vorbestimmten Zeitabschnitten vorgesehen ist.

8. Teletextsendungs-Empfänger nach Anspruch 7,
dadurch gekennzeichnet, daß sämtliche in dem geeigneten Speicher (40) gespeicherten Folgeseiten etwa alle 15 Minuten aktualisiert werden.

9. Teletextsendungs-Empfänger nach Anspruch 7,
dadurch gekennzeichnet, daß alle in dem geeigneten Speicher (40) gespeicherten Folgeseiten auch dann aktualisiert werden, wenn der Empfänger sich in einem Stand-By-Zustand befindet.

10. Teletextsendungs-Empfänger nach Anspruch 9,
dadurch gekennzeichnet, daß eine solche automatische Aktualisierung die Teletextdaten betrifft, die dem zuletzt ausgewählten Fernsehkanal zugeordnet sind, und welchem ein System von Teletextdaten zugeordnet ist.

11. Teletextsendungs-Empfänger nach Anspruch 7,
dadurch gekennzeichnet, daß eine solche automatische Aktualisierung die Teletextdaten betrifft, welche einem von dem Benutzer angegebenen, bevorzugten Fernsehkanal zugeordnet sind und daß dessen identifizierende Daten dann gespeichert werden.

## Revendications

1. Récepteur de transmissions de télétexte, les transmissions de télétexte étant sous forme d'une pluralité de pages, insérées dans un signal de télévision, pouvant être du type statique, c'est-à-dire une page unique, ou du type multifichier, constitués chacun d'une pluralité de sous-pages qui sont remplacées périodiquement dans le cycle de transmissions comprenant :
- des moyens (41, 42, 43) pour recevoir et pour démoduler le signal de télévision,
- des moyens de décodage (46) pour extraire le signal de télétexte associé,
- des moyens (48, 51) pour sélectionner une page choisie (677) parmi les pages transmises, et
- des moyens de mémoire (45) pour mémoriser au moins le contenu de l'une des pages télétexte choisies,
caractérisé en ce que le récepteur comprend :
- des moyens pour l'acquisition en parallèle, lors du même cycle de transmission, d'une pluralité de pages télétexte présentant des numéros de page différents,
- des moyens (102) de stockage, dans une mémoire adéquate (40) le contenu de toutes les sous-pages appartenant au bloc de pages (600-699) dont la page télétexte choisie (677) fait partie, et
- des moyens (40, 101-113, 201-212) permettant une sélection directe de n'importe quelle sous-page stockée en mémoire (1, 2, 3, 4, 5, 6) d'une page mulfifichier sélectionnée (677) en utilisant les touches "page suivante" et "page précédente" des moyens de sélection.

2. Récepteur de transmissions de télétexte selon la revendication 1, caractérisé en ce que lesdits moyens de stockage des sous-pages assurent la possibilité de stocker, dans le cas où le bloc présentant un intérêt (600-699) est constitué d'un nombre de sous-pages supérieur que peuvent être stockées dans ladite mémoire adéquate (40), les sous-pages de la moitié du bloc (650-699) où se trouve la page (677) sélectionnée.

3. Récepteur de transmission de télétexte selon la revendication 1, caractérisé en ce que le récepteur comprend des moyens supplémentaires formant circuit (105) pour l'affichage automatique de la première sous-page de la page multifichier télétexte sélectionnée (677).

4. Récepteur de transmissions de télétexte selon la revendication 1, caractérisé en ce que lesdits moyens supplémentaires comprennent des moyens formant circuit (108) assurant l'adressage des touches "page suivante" et "page précédente" compris dans lesdits moyens de sélection (50) pour sélectionner, respectivement, la sous-page suivante et précédente par rapport à la sous-page affichée.

5. Récepteur de transmissions télétexte selon la revendication 1, caractérisé en ce que lesdits moyens (40, 101-113, 201-212) permettant la sélection directe de n'importe quelle sous-page mémorisée, comprennent des moyens (203) assurant la possibilité, lors de la mise en marche du récepteur, de saisir et de mémoriser automatiquement dans ladite mémoire adéquate (40), le contenu de toutes les sous-pages de toutes les pages multifichier comprises dans les trois premiers groupes de pages (100-199, 200-299, 300-399).

6. Récepteur de transmissions de télétexte selon la revendication 5, caractérisé en ce que lesdits moyens (203) assurent la possibilité, lors de la mise en marche du récepteur, de saisir et de mémoriser automatiquement dans ladite mémoire adéquate (40) toutes les sous-pages de toutes les pages multifichiers comprises dans tous les groupes de pages.

7. Récepteur de transmissions de télétexte selon la revendication 5, caractérisé en ce que la possibilité est assurée de mettre à jour, à des intervalles prédéterminés, toutes les sous-pages mémorisées dans ladite mémoire adéquate (40).

8. Récepteur de transmissions de télétexte selon la revendication 7, caractérisé en ce que toutes les sous-pages mémorisées dans ladite mémoire adéquate (40) sont mises à jour toutes les 15 minutes environ.

9. Récepteur de transmissions de télétexte selon la revendication 7, caractérisé en ce que toutes les sous-pages mémorisées dans ladite mémoire adéquate (40) sont mises à jour, même dans le cas où le récepteur est en état de veille.

10. Récepteur de transmissions de télétexte selon la revendication 9, caractérisé en ce que ladite mise à jour automatique concerne les données de télétexte associées à la dernière chaîne de télévision sélectionnée à laquelle est associée un système de données télétexte.

11. Récepteur de transmissions de télétexte selon la revendication 7, caractérisé en ce qu'une telle mise à jour automatique concerne les données de télétexte associées à une chaîne de télévision préférée, indiquée par l'utilisateur, et dont les données d'identification sont ensuite mémorisées.
